(19) Europäisches Patentamt
European Patent Office
Office européen des brevets

(11) Veröffentlichungsnummer: **0 178 684**
**A1**

(12) # EUROPÄISCHE PATENTANMELDUNG

(21) Anmeldenummer: 85113263.9

(22) Anmeldetag: 18.10.85

(51) Int. Cl.⁴: C 07 C 43/21
C 07 C 69/017, C 09 K 19/32

(30) Priorität: 19.10.84 DE 3438424

(43) Veröffentlichungstag der Anmeldung: 23.04.86 Patentblatt 86/17

(84) Benannte Vertragsstaaten: AT BE CH DE FR GB IT LI LU NL SE

(71) Anmelder: Max-Planck-Gesellschaft zur Förderung der Wissenschaften e.V.
Bunsenstrasse 10
D-3400 Göttingen(DE)

(72) Erfinder: Zimmermann, Herbert
Mannheimerstrasse 53
D-9605 Schriesheim(DE)

(72) Erfinder: Poupko, Raphi
Weizmann Institute of Science Isotop Dep.
Rehovot 76100(IL)

(72) Erfinder: Luz, Zeev
Weizmann Institute of Science Isotop Dep.
Rehovot 76100(IL)

(72) Erfinder: Billard, Jean Lab.de Phys. de la Matière Condensée
Collège de France
F-75231 Paris Cedex 05(FR)

(74) Vertreter: Vossius Vossius Tauchner Heunemann Rauh
Siebertstrasse 4 P.O. Box 86 07 67
D-8000 München 86(DE)

(54) **Pyramidale Flüssigkristalle.**

(57) Gegenstand der Erfindung sind hexasubstituierte Tribenzocyclononatrien-Derivate, die eine neue Art von Flüssigkeitskristallen mit neuartigen "pyramidalen" Mesophasen darstellen. Die Verbindungen der Erfindung unterscheiden sich von den bekannten Flüssigkristallen durch eine andere Art der sterischen Molekülstruktur. Ihre Moleküle bestehen aus einem starren zentralen Kern mit pyramidaler Anordnung, an den Substituentenketten symmetrisch an die Basis der Pyramide gebunden sind. Die Verbindungen der Erfindung haben ein elektrisches Dipolmoment und können im elektrischen Feld angeregt werden und eignen sich deshalb zur Verwendung in Speichereinrichtungen und/oder elektro-optischen Anzeigeeinrichtungen.

EP 0 178 684 A1

./...

FIG. 3

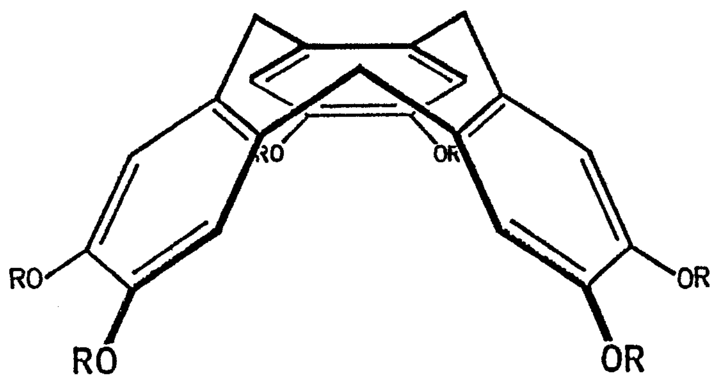

VOSSIUS · VOSSIUS · TAUCHNER · HEUNEMANN · RAUH
PATENTANWÄLTE
SIEBERTSTRASSE 4 · 8000 MÜNCHEN 86 · PHONE: (089) 474075
CABLE: BENZOLPATENT MÜNCHEN · TELEX 5-29 453 VOPAT D



u.Z.: U 038 EP

Max-Planck-Gesellschaft zur Förderung der Wissenschaften e.V.
34 Göttingen, Bundesrepublik Deutschland

" Pyramidale Flüssigkristalle"

Gegenstand der Erfindung sind Verbindungen, die eine neue Art von Flüssigkristallen mit völlig neuartigen "pyramidalen" Mesophasen darstellen. Die Verbindungen der Erfindung unterscheiden sich von den bekannten Flüssigkristallen durch eine andere Art der sterischen Molekülstruktur. Ihre Moleküle bestehen aus einem starren zentralen Kern mit pyramidaler Anordnung, an den Substituentenketten symmetrisch an die Basis der Pyramide gebunden sind. Die Verbindungen der Erfindung haben ein elektrisches Dipolmoment und können im elektrischen Feld angeregt werden und eignen sich deshalb zur Verwendung in Speichereinrichtungen und/oder elektro-optischen Anzeigeeinrichtungen. Sie werden als pyramidale Flüssigkristalle bezeichnet.

Flüssigkristalline Phasen und ihre Anwendungsmöglichkeiten als elektronische Komponenten z.B. auf dem Gebiet der Elektrooptik, der zerstörungsfreien Materialprüfung, der Analytik sowie der medizinischen Diagnostik, sind seit längerer Zeit bekannt. Aufgrund ihrer optischen, rheologischen und thermodynamischen Eigenschaften lassen sich smektische, nematische und cholesterische flüssig-kristalline Phasen leicht voneinander unterscheiden. Diese klassischen Flüssigkristalle sind meist aus langgestreckten Molekülen aufgebaut, die unter

bestimmten physikalischen Bedingungen eine regelmäßige Anordnung aufweisen. Ein Überblick über Aufbau und Eigenschaften flüssig-kristalliner Phasen und ihre Anwendungsmöglichkeiten findet sich in Ullmanns Enzyklopädie der technischen Chemie, 4. Aufl. (1976) Bd. 11, S. 657 - 671.

Eine neue Art von Flüssigkristallen, die sich in ihrem Molekülaufbau von den bis dahin bekannten flüssig-kristallinen Phasen aus langgestreckten Molekülen unterscheidet, stellen die sogenannten diskotischen Flüssigkristalle dar, vgl. z.B. J. Billard und Mitarb., Nouveau Journal de Chimie, Bd. 2 (1978), S. 535 - 540. Diese Flüssigkristalle bestehen aus flachen, scheibenförmigen Molekülen mit einem zentralen, ungesättigten Kern, an dessen Rand Alkyl-, Alkanoyl-,Alkylbenzoyl- oder Alkoxybenzoylketten gebunden sind. Beispiele für aromatische Kerne sind Benzol, Triphenylen und Truxen. Die Substituenten (gewöhnlich 6 an der Zahl) sind an den Kern meist über Sauerstoffbrücken, d.h. Äther- oder Ester-Bindungen gebunden.

In der US-PS 4 333 709 ist ein Gemisch aus Flüssigkristallen mit einer nematischen Mesophase beschrieben, das im wesentlichen aus einem Gemisch von hexasubstituierten Triphenylenderivaten besteht, die einen scheibenförmigen Molekülaufbau besitzen. Diese Gemische sollen auf ein elektrisches Feld ansprechen und deshalb für elektrooptische Sichtanzeigeeinrichtungen verwendet werden können.

Aus der US-PS 4 430 650 ist ein Anzeigeverfahren mit Informationsgedächtnis bekannt, bei dem bestimmte scheibenartige Flüssigkristalle verwendet werden. Sie werden beiderseits der Übergangstemperatur zwischen zwei Mesophasen lokal erhitzt und dann rasch abgekühlt, wobei der Flüssigkristall diffus mit einem zur Verwendung für Anzeigezwecke geeigneten Kontrast wird.

Die eingesetzten Flüssigkristalle sind flache scheibenförmige Triphenylenderivate der Formel

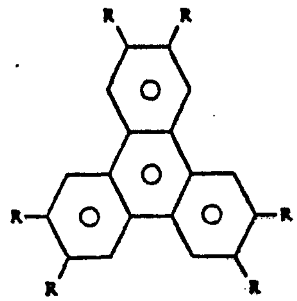

wobei R 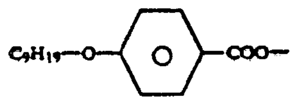

und 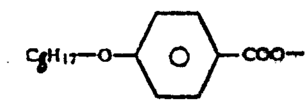 bedeutet.

Die bekannten diskotischen Flüssigkristalle weisen infolge ihres flachen Molekülbaues höchstens ein geringes elektrisches Dipolmoment auf und richten sich deshalb im elektrischen Feld nicht oder kaum aus. Außerdem sind ihre mesomorphen Übergangstemperaturen verhältnismäßig hoch, was ihre praktische Verwendbarkeit weiter einschränkt.

Der Erfindung liegt die Aufgabe zugrunde, Verbindungen bereitzustellen, die eine neue Klasse von Mesophasen aufweisen, nämlich Moleküle, die sich in der flüssig-kristallinen Phase säulenförmig aufbauen und außerdem einen polaren Molekülaufbau mit Anisotropie aufweisen.

Diese Aufgabe wird durch die Erfindung gelöst.

Gegenstand der Erfindung sind somit hexasubstituierte Tribenzocyclononatrien-Derivate der allgemeinen Formel I

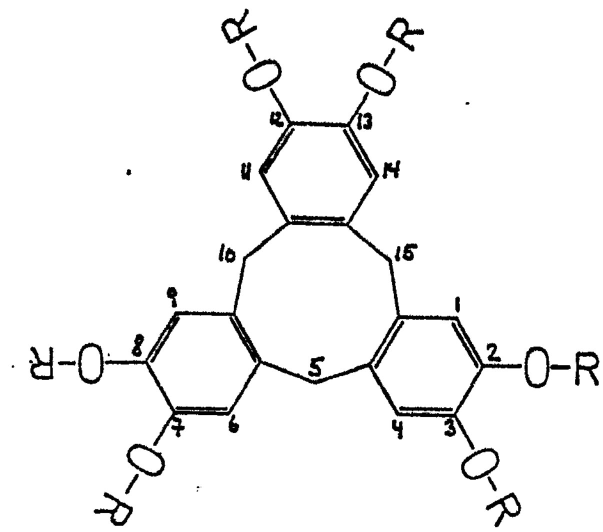

(I)

in der die Reste R gleich oder verschieden sind und unabhängig voneinander Alkylreste mit mindestens 6-C-Atomen, Alkanoylreste mit mindestens 10 C-Atomen oder p-Alkyl- oder p-Alkoxybenzoylreste der Formeln

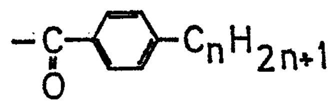

oder

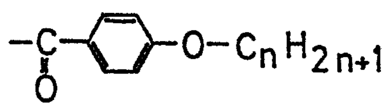

darstellen, in denen n eine ganze Zahl im Wert von mindestens 5 ist.

Die Verbindungen der Erfindung lassen sich als hexasubstituierte Tribenzocyclononatriene bezeichnen (2,3,7,8,12,13-hexasubstituierte 5,10,15-Trihydro-Tribenzo[a,d,g]-cyclononatriene).

Unter den Verbindungen der allgemeinen Formel I sind diejenigen bevorzugt, in denen die Reste R jeweils die gleiche Bedeutung haben. Bevorzugt sind ferner diejenigen Verbindungen der allgemeinen Formel I, in denen die Reste R Alkylreste mit 6 bis 18 C-Atomen oder Alkanoylreste mit 10 bis 18 C-Atomen bedeuten, sowie die Alkoxybenzoyl- und Alkylbenzoylderivate

der allgemeinen Formel I, in denen n nicht größer als 18 ist, insbesondere einen Wert von 6 bis 14 hat.

Die Hexaalkoxytribenzocyclononatriene der allgemeinen Formel I-a werden durch Umsetzung von Hexahydroxytribenzocyclononatrien der allgemeinen Formel II mit einem entsprechenden n-Alkylbromid gemäß nachstehendem Reaktionsschema hergestellt.

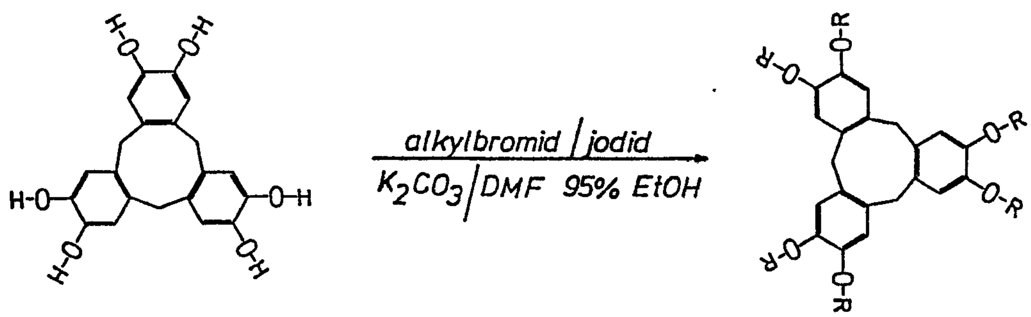


(Ia)

R=Alkyl

Die Umsetzung erfolgt günstigerweise unter Erwärmen des Reaktionsgemisches, beispielsweise bei Rückflußtemperatur. Die Reaktionsteilnehmer können in stöchiometrischem Verhältnis eingesetzt werden; bevorzugt ist jedoch ein Überschuß des Alkylhalogenids, beispielsweise ein 2 - 10-facher Überschuß. Die Umsetzung kann in einem Lösungsmittel, wie Äthanol oder n-Butanol durchgeführt werden. Die Zugabe eines säurebindenden Mittels, wie $K_2CO_3$, $Cs_2CO_3$ oder NaOH, fördert die Umsetzung. Weiterhin sind diese Verbindungen durch Umsetzung von II mit einem Alkylhalogenid in THF/NaH in Gegenwart eines Kronenäthers zugänglich.

Die Hexaalkanoyloxytribenzocyclononatriene der allgemeinen Formel I-b (einschließlich der Alkyl- und Alkoxybenzoylderivate) können durch Umsetzung von Hexahydroxytribenzocyclononatrien der allgemeinen Formel II mit dem entsprechenden Säurehalogenid erhalten werden. Diese Umsetzung wird unter Veresterungsbedingungen, z.B. bei Rückflußtemperatur durchgeführt. Als Säurehalogenid wird vorzugsweise das entsprechende Säurechlorid verwendet. In einer anderen Ausführungsform kann das Säurechlorid langsam zu einer Lösung des Hexahydroxytribenzocyclononatriens in einem Lösungsmittel, wie Pyridin, bei niedriger Temperatur, beispielsweise etwa $0^{o}C$, gegeben werden. Das Reaktionsgemisch wird dann mehrere Stunden bis zur vollständigen Umsetzung gerührt.

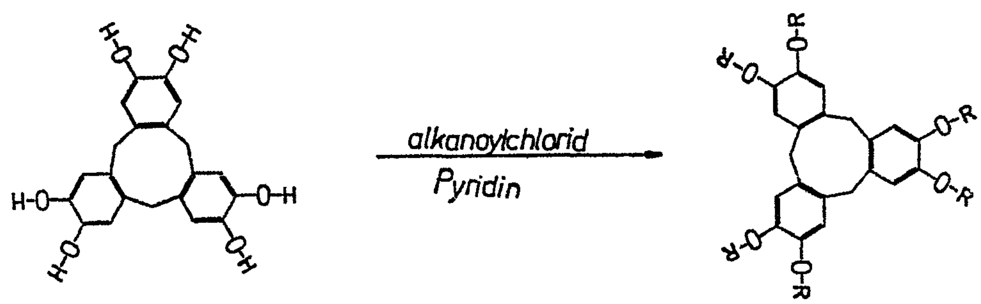


(Ib)

R = Alkanoyl oder Benzoyl

Das als Ausgangsverbindung verwendete Hexahydroxytribenzocyclononatrien der allgemeinen Formel II kann durch Hydrolyse von Hexamethoxytribenzocyclononatrien der allgemeinen Formel III erhalten werden, das unter der Bezeichnung Cycloveratrylen bekannt ist und seinerseits leicht durch Umsetzung von Formaldehyd mit 1,2-Dimethoxybenzol (Veratrol) in Gegenwart einer starken Säure hergestellt werden kann. Die Herstellung der Ausgangsverbindung erfolgt somit nach folgendem Reaktionsschema:

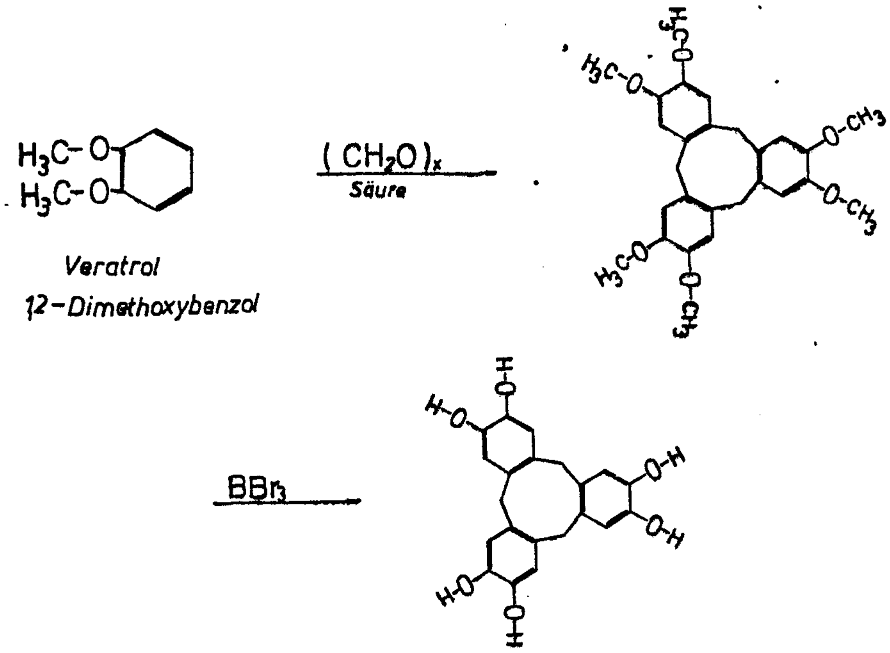


Veratrol
1,2-Dimethoxybenzol

Als alternatives Herstellungsverfahren bietet sich die Kondensation von 1,2-Dialkoxybenzolen mit Paraformaldehyd an. 1,2-Dialkoxybenzole können bequem durch Alkylierung von 1,2-Dihydroxybenzol (Catechol, Brenzkatechin) erhalten werden. Werden 1,2-Dialkoxybenzole mit 6 bis 18 C-Atomen in der Alkylkette eingesetzt, so können die entsprechenden pyramidalen Flüssigkristalle in einem Reaktionsschritt erhalten werden.

Die Hexaalkoxytribenzocyclononatriene sind weiterhin durch Kondensation aus den entsprechenden 3,4-Dialkoxybenzylalkoholen oder 3,4- Dialkoxybenzylchloriden oder -bromiden durch Umsetzung mit Paraformaldehyd unter sauren Bedingungen erhältlich. Diese Umsetzungen lassen sich durch nachstehende Formeln wiedergeben:

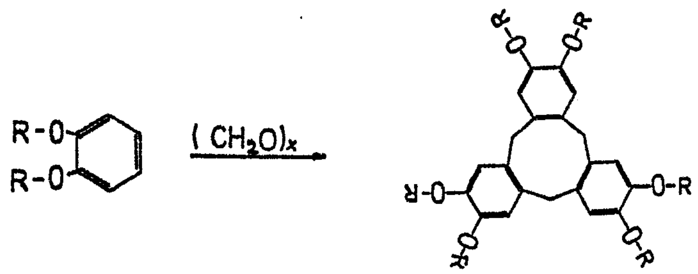


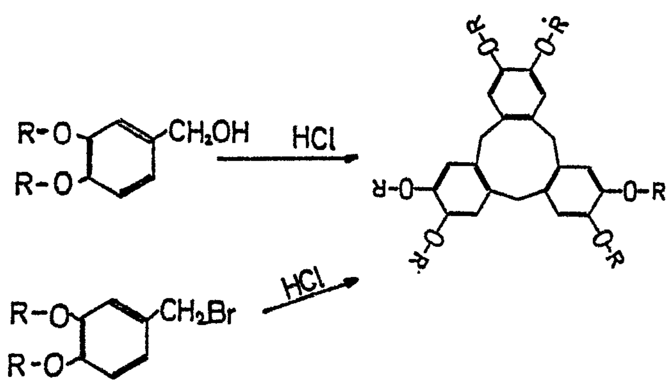


Sowohl die Alkoxy- als auch die Alkanoyloxyderivate der allgemeinen Formel I weisen nur bei genügender Länge der Seitenketten in den jeweiligen Serien von Verbindungen eine Mesophase, d.h. einen flüssigkristallinen Zustand auf. Dagegen sind die kürzerkettigen Derivate, nämlich die $C_{1-5}$-Alkoxy- sowie die $C_{1-8}$-Alkanoyloxyderivate Feststoffe ohne stabile Mesophase. Erst bei genügender Kettenlänge der Seitenketten entstehen stabile Mesophasen, vgl. Fig. 1 für die Alkoxyderivate und Fig. 2 für die Alkanoyloxyderivate.

Die Verbindungen der Erfindung enthalten ein Kohlenstoffringsystem, das aus einem Cyclononatrienring besteht, an den getrennt voneinander drei Benzolringe ankondensiert sind, welche ihrerseits die Alkoxy- bzw. Alkanoyloxysubstituenten tragen. Die Verbindungen zeigen den sterischen Aufbau einer Kronen-Konformation; vgl. Fig. 3. Die Molekülstruktur ist somit pyramidal. Die aromatischen Ringe bilden die drei Seiten

der Pyramide, an deren Basis sich die Substituenten befinden. Die neuen flüssigkristallinen Verbindungen der Erfindung weisen somit eine pyramidale Konfiguration anstelle der flachen zentralen Einheit der diskotischen Verbindungen auf und zeigen verschiedene neuartige "pyramidale" Mesophasen. Infolge ihrer Kronen-Konformation sind die Verbindungen der Erfindung polar mit einem elektrischen Dipolmoment.

Im flüssigkristallinen Zustand ordnen sich die Verbindungen der Erfindung in der Art von Hütchen übereinander an und ergeben somit einen säulenförmigen Aufbau. Diese Molekül-Säulen ordnen sich ihrerseits parallel nebeneinander an. Die Krümmung der Moleküle kann im säulenartigen Aufbau relativ zur Stapelachse positiv oder negativ sein. Einige der Mesophasen sind optisch einachsig. Defekte mit gradliniger Achse werden beobachtet. Dies ist ein Hinweis für die Anordnung der Moleküle in parallelen Säulen. Aus dem Dipolmoment dieser Molekülsäulen resultiert ein Dipolmoment in den pyramidalen Mesophasen.

Wird während des Entstehens pyramidaler Mesophasen (durch Kühlung der isotropen Phase) ein elektrisches Feld angelegt, so können polarisierte Mesophasen erhalten werden. Auf diese Weise zeigen diese neuartigen pyramidalen Mesophasen einen sogenannten 'memory effect', wie er in der US-PS 4 430 650 beschrieben ist. Der 'memory effect' ist aber bei den Verbindungen der Erfindung mit ihren hintereinandergeschalteten pyramidalen Molekülen und der daraus folgenden Summierung der Dipolmomente in Richtung der Säulenlängsachse erheblich stärker als bei den bekannten diskotischen Mesophasen mit flachen Molekülen. Durch lokales kurzzeitiges Erwärmen im Bereich eines Phasenübergangs (Mesophase-Mesophase oder Mesophase-isotrope Phase), z.B. mit einem IR-Laser, bei gleichzeitigem Anlegen eines anders gerichteten äußeren elektrischen Feldes ordnen sich die Moleküle in diesen lokalen Bereichen unter Einwirkung der elektrischen Feldlinien anders

aus als die in ihrer Umgebung. Es entsteht ein Flüssigkristall mit einem "Muster".

Die Übergangstemperaturen einer Anzahl von Verbindungen der Alkoxy- und Alkanoyloxyderivate der allgemeinen Formel I sind in den Tabellen I, II und III zusammengestellt sowie in den Fig. 1 und 2 graphisch dargestellt. In beiden Reihen hängt das Auftreten der flüssigkristallinen Mesophasen von der Länge der an die zentrale Ringeinheit gebundenen Seitenketten ab.

Bei Verbindungen des Typs R = Alkylbenzoyl - (n = 5 - 18) ändert sich beim Abkühlen oder beim Aufheizen der Mesophase das Vorzeichen der optischen Anisotropie. Bei einer bestimmten Temperatur entsteht eine Doppelbrechung von 0. Dieser Vorzeichenwechsel der optischen Anisotropie beim Aufheizen oder Abkühlen ist vollständig reversibel. Das Vorzeichen der Mesophase beim Abkühlen von der isotropen Phase kommend ist gewöhnlich negativ, die Tieftemperaturphase ist gewöhnlich positiv.

Diese Eigenschaft ermöglicht die Verwendung der genannten Verbindungen als flüssig-kristalline -thermooptische Schalter; die Verbindungen eignen sich auch deshalb zur Verwendung in Speichereinrichtungen und/oder elektrooptischen Anzeigeeinrichtungen.

Alle Mesophasen der Verbindungen der Alkoxy-Reihe sind kontinuierlich miteinander mischbar. Desgleichen sind die Mesophasen der Alkanoyloxy-Reihe kontinuierlich miteinander mischbar. Phasendiagramme ausgewählter Gemische sind in den Figuren 4 bis 7 dargestellt.

Die Beispiele erläutern die Erfindung.

## B e i s p i e l 1

### Hexahexyloxytribenzocyclononatrien

0,5 g Hexahydroxytribenzocyclononatrien werden 30 Minuten in 50 ml 95 % Äthanol mit 6 g $K_2CO_3$ unter Rückfluß erhitzt. Dann werden 6 g n-Hexylbromid in 20 ml Dimethylformamid (5-facher Überschuß) zugegeben und das Gemisch 24 Stunden unter Rückfluß erhitzt und gerührt. Anschließend wird das Reaktionsprodukt heiß filtriert und danach das Lösungsmittel, überschüssiges n-Hexylbromid und Dimethylformamid unter vermindertem Druck abdestilliert. Das erhaltene Produkt wird säulenchromatographisch an Kieselgel mit einem Gemisch aus $CHCl_3$ und n-Hexan als Laufmittel gereinigt. Ausbeute: 0,9 g (74 %) der Titelverbindung.

Das NMR-Spektrum zeigt die starre Kronen-Konformation mit drei exakt äquivalenten Paaren von axialen und äquatorialen Wasserstoffatomen und einer einzigen aromatischen Resonanz wegen der Gleichwertigkeit der sechs aromatischen Protonen.

NMR- Spektrum:

0,89 ppm (t;J=6,8 Hz; 18 H - $C\underline{H}_3$), 1,1 - 1,6 ppm (m; 36 H - $C\underline{H}_2$-$C\underline{H}_2$-$C\underline{H}_2$-$CH_3$), 1,60 - 1,80 ppm (m; 12 H -O-$CH_2$-$C\underline{H}_2$), 3,49 ppm (d; J=14,7 Hz, Ar-$C\underline{H}_2$-Ar equ.) 3,85 - 4,0 ppm (m; 12 H , -O-$C\underline{H}_2$), 4,70 ppm (d; J=14,7 Hz Ar-$C\underline{H}_2$-ax-Ar), 6,82 (S; 12H $H_{arom.}$)

Analyse für $C_{57}H_{90}O_6$ :

| | | |
|---|---|---|
| Ber.: | C = 78,57 % | H = 10,41 % |
| Gef.: | C = 78,83 % | H = 10,61 % |

Dünnschichtchromatogramm (Kieselgel/$CDCl_3$/n-Hexan): Einzelner Fleck.

## Beispiele 2 bis 7

Nach dem Verfahren von Beispiel 1 werden unter Verwendung von n-$C_{7-12}$-Alkylbromid anstelle von n-Hexylbromid die entsprechenden Hexa-$C_{7-12}$-Alkoxytribenzocyclononatriene hergestellt. Die höheren Homologen werden zweimal aus Äthanol umkristallisiert und danach chromatographisch gereinigt, während die niedrigeren Homologen direkt gemäß Beispiel 1 säulenchromatographisch gereinigt werden. Die Übergangstemperaturen der pyramidalen Mesophasen der erhaltenen Verbindungen sind in Tabelle I zusammengefaßt und in Fig. 1 graphisch dargestellt.

## Beispiel 8

Hexatridecanoyloxytribenzocyclononatrien

1 g Hexahydroxytribenzocyclononatrien und 25 ml n-Tridecanoylchlorid werden 5 Stunden auf 185°C erhitzt und gerührt. Dann wird das überschüssige Säurechlorid durch Destillation unter vermindertem Druck entfernt und der erhaltene Rückstand zweimal aus Äthanol umkristallisiert. Anschließend wird das Produkt säulenchromatographisch an Kieselgel mit Methylenchlorid als Laufmittel gereinigt. Ausbeute: 2,5 g (58 %) der Titelverbindung.

Analyse für $C_{99}H_{162}O_{12}$:

| | | |
|---|---|---|
| Ber.: | C = 76,99 % | H = 10,57 % |
| Gef.: | C = 77,20 % | H = 10,84 % |

## Beispiel 9

Hexapentadecanoyloxytribenzocyclononatrien

0,5 g Hexahydroxytribenzocyclononatrien werden in 46 ml wasserfreies Pyridin gelöst. Unter Kühlen und Rühren werden langsam 8,2 g Pentadecanoylchlorid zugegeben und das Gemisch wird weitere 10 Stunden bei 0°C und dann 24 Stunden bei Raumtemperatur gerührt. Anschließend wird das Gemisch in überschüssige

verdünnte Salzsäure gegossen. Der ausgeschiedene Feststoff wird abfiltriert und zweimal aus Äthanol umkristallisiert. Ausbeute: 1,6 g (67 %) der Titelverbindung, die säulenchromatographisch an Kieselgel mit Methylenchlorid als Laufmittel gereinigt wird.

Analyse für $C_{111}H_{186}O_{12}$:

| | | |
|---|---|---|
| Ber.: | C = 77,84 % | H = 11,94 % |
| Gef.: | C = 77,91 % | H = 10,90 % |

B e i s p i e l e 10 bis 13

Nach dem Verfahren der Beispiele 8 oder 9 werden bei Verwendung der entsprechenden $C_{10-12}$- oder $C_{14}$-Alkanoylchloride anstelle von Tridecanoylchlorid bzw. Pentadecanoylchlorid die entsprechenden Hexa-$C_{10-12}$- oder $C_{13}$-Alkanoyloxytribenzocyclononatriene erhalten. Die Übergangstemperaturen der pyramidalen Mesophasen dieser Verbindungen sind in Tabelle II zusammengefaßt und in Fig. 2 graphisch dargestellt.

B e i s p i e l 14

Hexa-n-Decyloxybenzoyloxytribenzocyclononatrien

0,5 g Hexahydroxytribenzocyclononatrien in 30 ml wasserfreiem Pyridin werden wie in Beispiel 9 mit 7 g n-Decyloxybenzoylchlorid bei 0°C drei Tage gerührt. Nach dem Abdestillieren des Pyridins unter vermindertem Druck und der Abtrennung von Py.HCl wird in $CH_2Cl_2$ aufgenommen, mit 2 n HCl extrahiert und die Verbindung säulenchromatographisch an $Al_2O_3$ mit $CH_2Cl_2$ als Laufmittel gereinigt.

## Beispiele 15 und 16

Nach dem in Beispiel 14 beschriebenen Verfahren werden bei Verwendung von p-Octylbenzoylchlorid bzw. p-Decylbenzoylchlorid anstelle von Decyloxybenzoylchlorid die entsprechenden Hexa-p-octyl- bzw. Hexa-p-decylbenzoyloxytribenzocyclononatriene erhalten. Die Übergangstemperaturen der pyramidalen Mesophasen dieser Verbindungen sind in Tabelle III zusammengestellt.

Tabelle I

**Übergangstemperaturen (°C), Enthalpien (KJ/Mol in Klammern) von Hexaalkyloxytribenzocyclononatrien-Derivaten**

**$R = n - C_mH_{2m-1}-O-$**

| m | $K_1$ | | $K_2$ | | $P_1$ | | $P_2$ | | I |
|---|---|---|---|---|---|---|---|---|---|
| 4 | • | | | | | | | 135.6 (22.1) | • |
| 5 | • | 68.4 (21.7) | • | | | | | 103.8 (16.0) | • |
| 6 | • | 40.9 (15.7) | | | | | • | 92.2 (14.4) | • |
| 7 | • | 25.0 (21.1) | | | | | • | 79.9 (9.3) | • |
| 8 | • | 24.9 (24.8) | | | | | • | 71.5 (6.9) | • |
| 9 | • | 18.7 (28.6) | | | | | • | 66.1 (6.9) | • |
| 10 | • | 25.5 (40.4) | | | | | • | 61.6 (5.7) | • |
| 11 | • | 34.8 (51.7) | | | • | 44.2 (7.2) | • | 63.5 (5.7) | • |
| 12 | • | 48.3 (76.0) | | | | | • | 61.6 (6.2) | • |

$P_1$, $P_2$ = pyramidale flüssig-kristalline Phasen

$K_1$, $K_2$ = kristalline Phasen

I = isotrope Phase

Tabelle II

Übergangstemperaturen (°C), Enthalpien (KJ/Mol in Klammern) von Hexaalkanoyloxytribenzocyclononatrien-Derivaten

$$R = n\text{-}\ C_{m-1}H_{2m-1}-\underset{\overset{\|}{O}}{C}-O-$$

| m | $K_1$ | | $P_1$ | | $P_2$ | | $P_3$ | | I |
|---|---|---|---|---|---|---|---|---|---|
| 8 | • | | | | | | | 153.1 (31.0) | • |
| 9 | • | | | | | | | 152.6 (30.2) | • |
| 10 | • | 18.2 (22.1) | • | 32.7 (14.8) | • | | | 146.2 (29.2) | • |
| 11 | • | 31.5 (22.0) | • | 38.6 (17.3) | • | 131.6 (3.7) | • | 140.8 (18.8) | • |
| 12 | • | 58.1 (48.4) | | | • | 118.8 (3.1) | • | 140.6 (20.2) | • |
| 13 | • | 67.4 (67.0) | | | • | 99.5 (2.3) | • | 139.2 (20.9) | • |
| 14 | • | 73.4 (81.0) | | | • | 81.4 (1,4) | • | 136.2 (18.5) | • |
| 15 | • | 80.5 (118.4) | | | | | • | 134.6 (19.1) | • |

$P_1$, $P_2$, $P_3$ = voneinander verschiedene pyramidale flüssig-kristalline Phasen

K = kristalline Phase

I = isotrope Phase

0178684

Tabelle III

R = 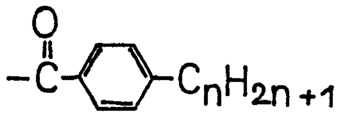 n = 8

| n | krist. | | pyram. Mesophase | | isotrop |
|---|---|---|---|---|---|
| 8 | • | 17° C | • | 156° C | • |
| 10 | • | 42° C | • | 162° C | • |

R = 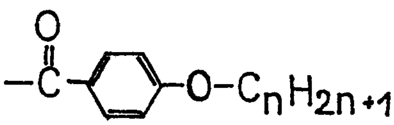 n = 10

| n | pyram. Mesophase | | isotrop |
|---|---|---|---|
| 10 | • | 191° C | • |

## Patentansprüche

1. Hexasubstituierte Tribenzocyclononatrien-Derivate der allgemeinen Formel I

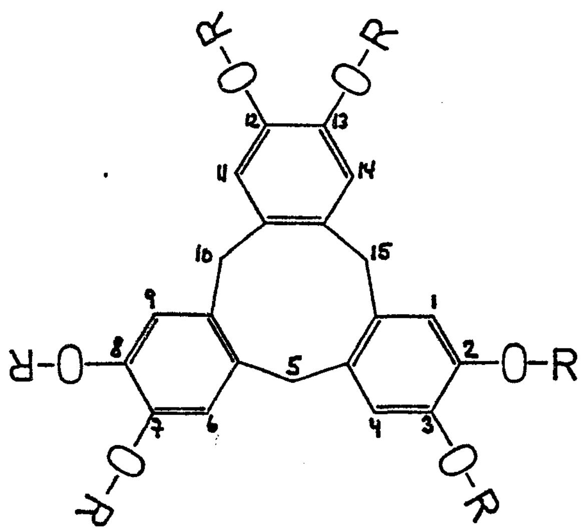

(I)

in der die Reste R gleich oder verschieden sind und unabhängig voneinander Alkylreste mit mindestens 6 C-Atomen, Alkanoylreste mit mindestens 10 C-Atomen oder p-Alkyl- oder p-Alkoxybenzoylreste der Formeln

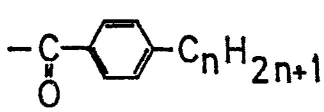

oder

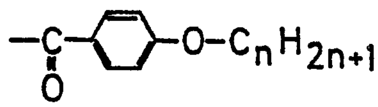

darstellen, in denen n eine ganze Zahl im Wert von mindestens 5 ist.

2. Verbindungen nach Anspruch 1, dadurch gekennzeichnet, daß die Reste R in der allgemeinen Formel I untereinander gleich sind.

3. Verbindungen nach Anspruch 2, dadurch gekennzeichnet, daß die Reste R in der allgemeinen Formel I Alkylreste mit 6 bis 18 C-Atomen sind.

4. Verbindungen nach Anspruch 2, dadurch gekennzeichnet, daß die Reste R in der allgemeinen Formel I Alkanoylreste mit 10 bis 18 C-Atomen sind.

5. Verbindungen nach Anspruch 1, dadurch gekennzeichnet, daß n in den Alkyl- oder Alkoxybenzoylresten einen Wert von 5 bis 18 besitzt.

6. Verfahren zur Herstellung der Verbindungen der allgemeinen Formel I gemäß Anspruch 1, dadurch gekennzeichnet, daß man Hexahydroxytribenzocyclononatrien der Formel II

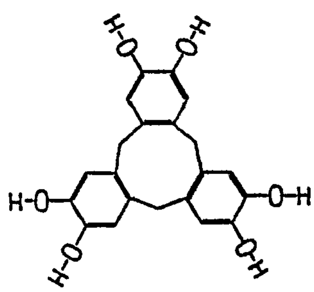

(II)

mit einem entsprechenden Alkylhalogenid, Alkanoylhalogenid, p-Alkoxybenzoylhalogenid oder p-Alkylbenzoylhalogenid umsetzt.

7. Verfahren zur Herstellung von Verbindungen der allgemeinen Formel I, in der die Reste R Alkylreste bedeuten, gemäß Anspruch 1, dadurch gekennzeichnet, daß man ein 1,2-Dialkoxybenzol der allgemeinen Formel III

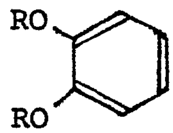

III

mit Formaldehyd umsetzt.

8. Verfahren zur Herstellung von Verbindungen der allgemeinen Formel I, in der die Reste R Alkylreste bedeuten, gemäß Anspruch 1, dadurch gekennzeichnet, daß man einen 3,4-Dialkoxybenzylalkohol oder das entsprechende Benzylchlorid oder -bromid der allgemeinen Formel IV

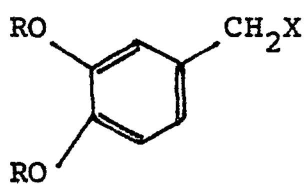

IV

in der X eine Hydroxylgruppe oder ein Chlor- oder Bromatom bedeutet unter sauren Bedingungen mit Paraformaldehyd umsetzt.

9. Verwendung der Verbindungen der allgemeinen Formel I gemäß Anspruch 1 bis 5 in Speichereinrichtungen und/ oder elektro-optischen Anzeigeeinrichtungen.

1/7

FIG. 1

Umwandlungstemperaturen pyramidaler, kristalliner und isotroper Phasen von Hexaalkoxy-Derivaten- R = n-$C_mH_{2m+1}$-O- von Tribenzocyclononatrien.

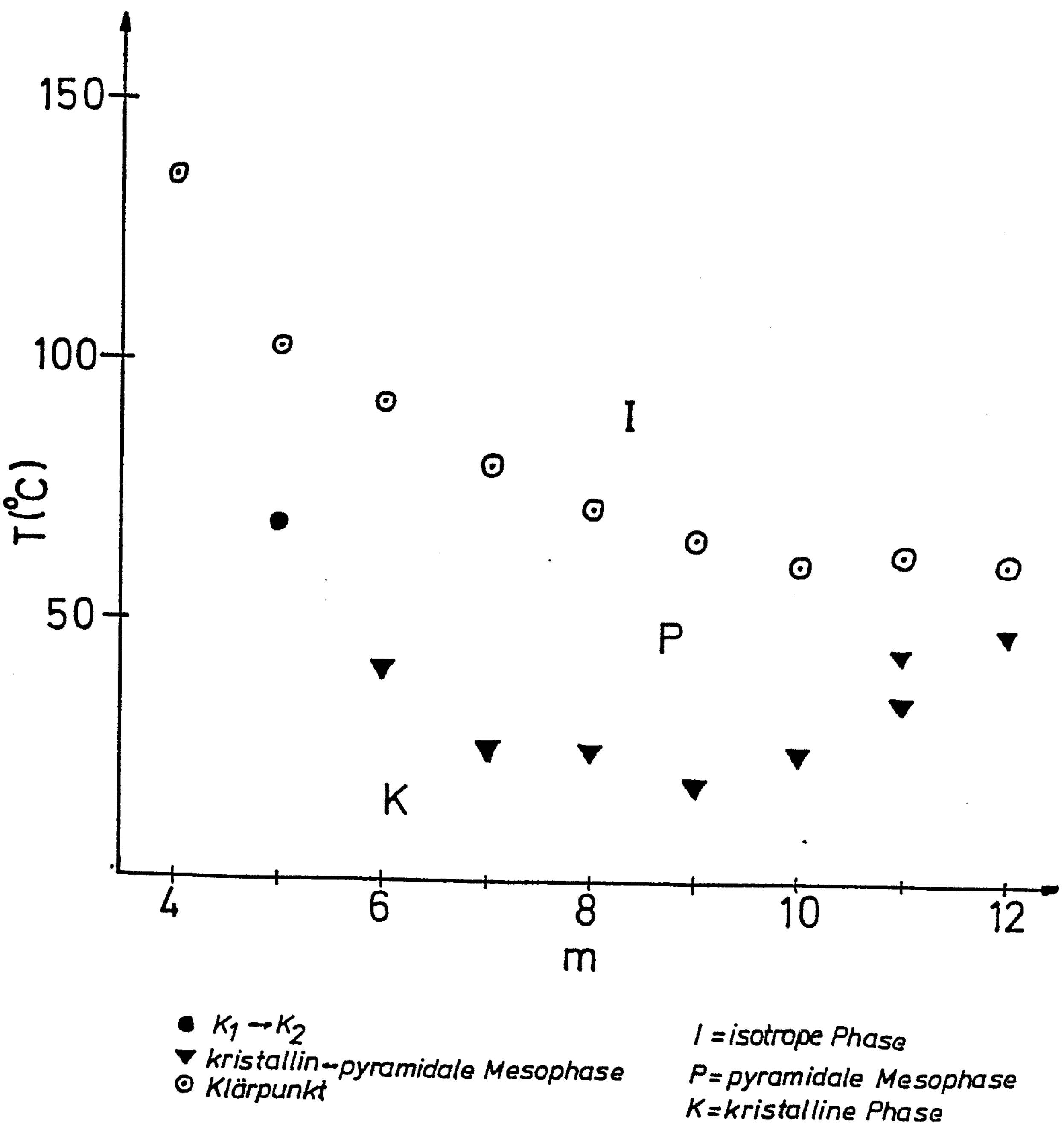

2/7

FIG. 2

Umwandlungstemperaturen pyramidaler, kristalliner und isotroper Phasen von Hexaalkanoyloxy-Derivaten- R = n- $C_{m-1}H_{2m-1}-\underset{O}{\overset{\|}{C}}-O-$ von Tribenzocyclononatrien.

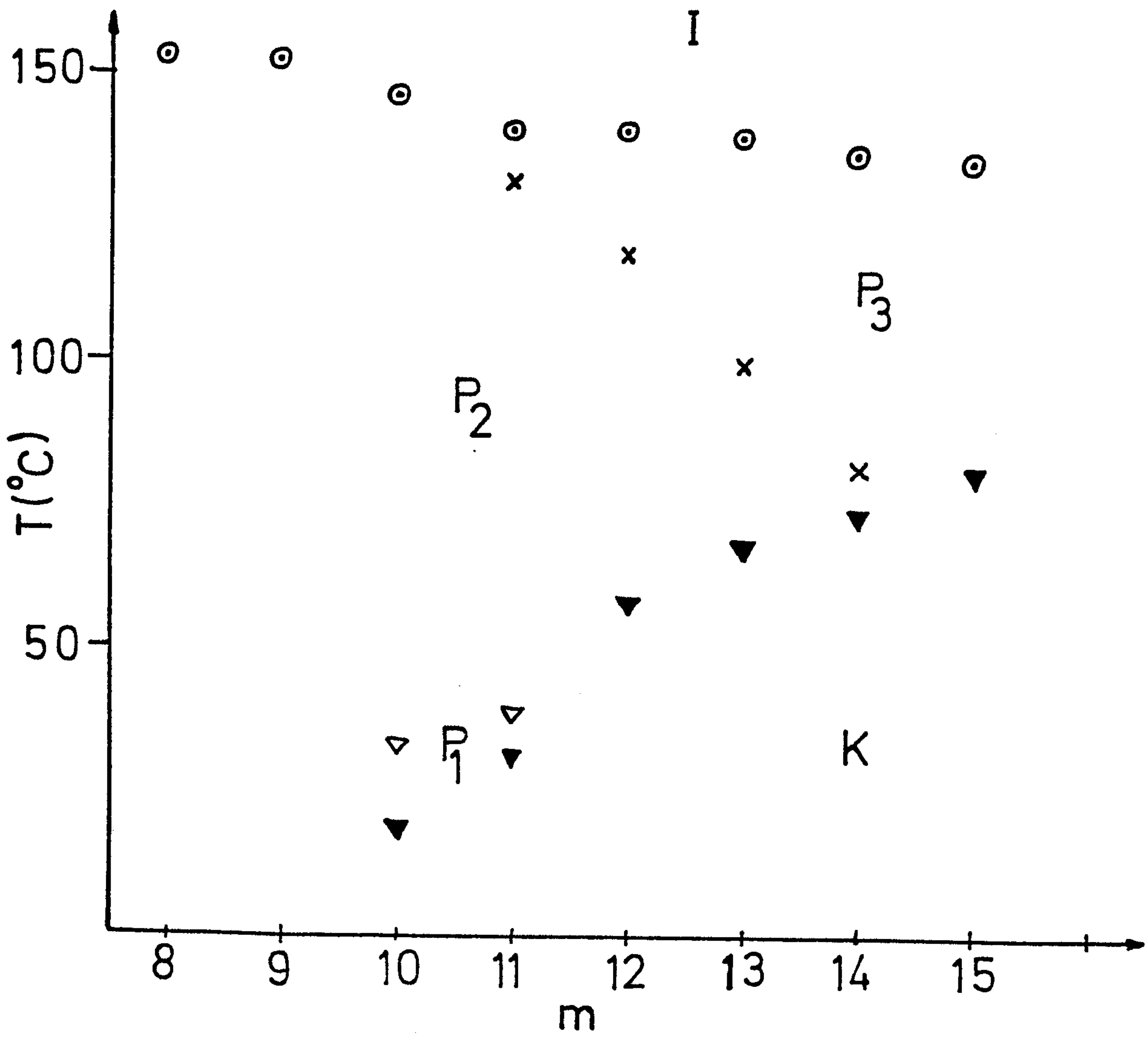


x = P2↔P3

⊙ = Klärpunkt

▼ =kristallin / pyramidale Mesophasen

▽ = P1↔P2

P1 P2 P3 = pyramidale Mesophasen

I = isotrope Phase

K = kristalline Phase

FIG. 3

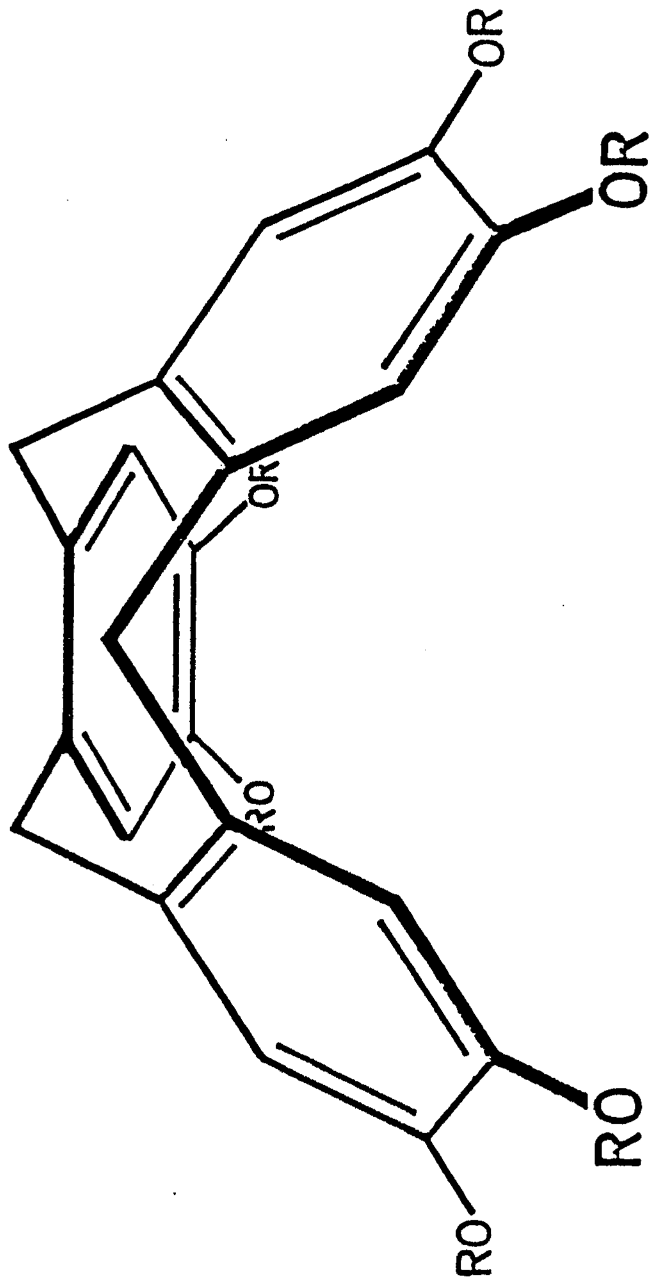

FIG. 4

Phasendiagramm der binären Mischungen von $C_6$-Hexaalkoxy- und $C_7$-Hexaalkoxy-Derivaten: Vollständige Mischbarkeit der beiden Komponenten in der isotropen und pyramidalen Phase. Die Löslichkeit der reinen Festkomponente (xxx) ist berechnet.

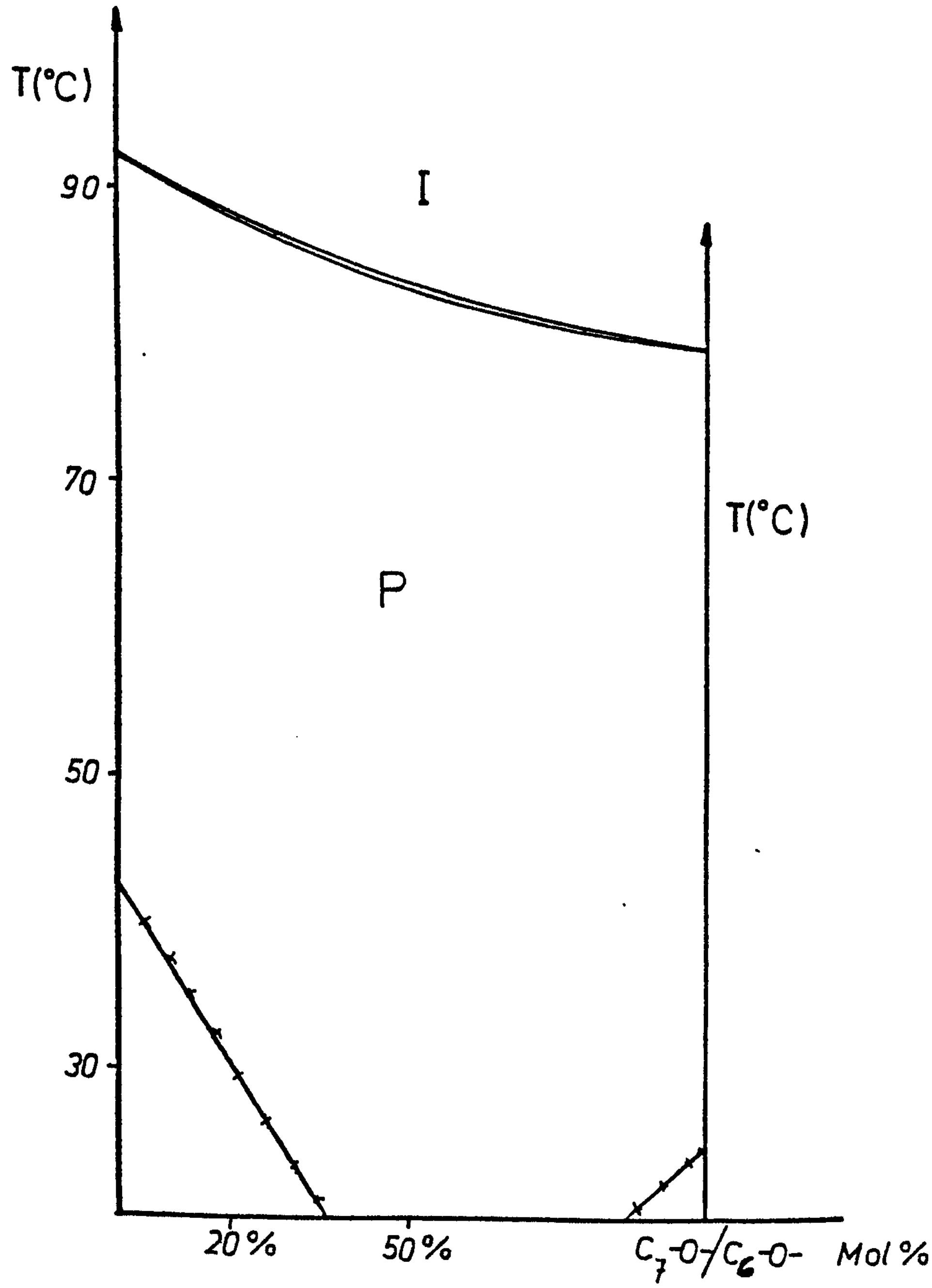


I = isotrope Phase
P = pyramidische Mesophase

FIG. 5

Phasendiagramm der binären Mischungen von $C_{12}$- und $C_{11}$-Hexaalkoxy-Derivaten: Vollständige Mischbarkeit in der isotropen und pyramidalen Mesophase $P_2$. Die Komponente $C_{12}$ hat keine stabile $P_1$-Mesophase. Die beobachtete eutektische Temperatur beträgt 31°C und ist in Übereinstimmung mit dem berechneten Wert.

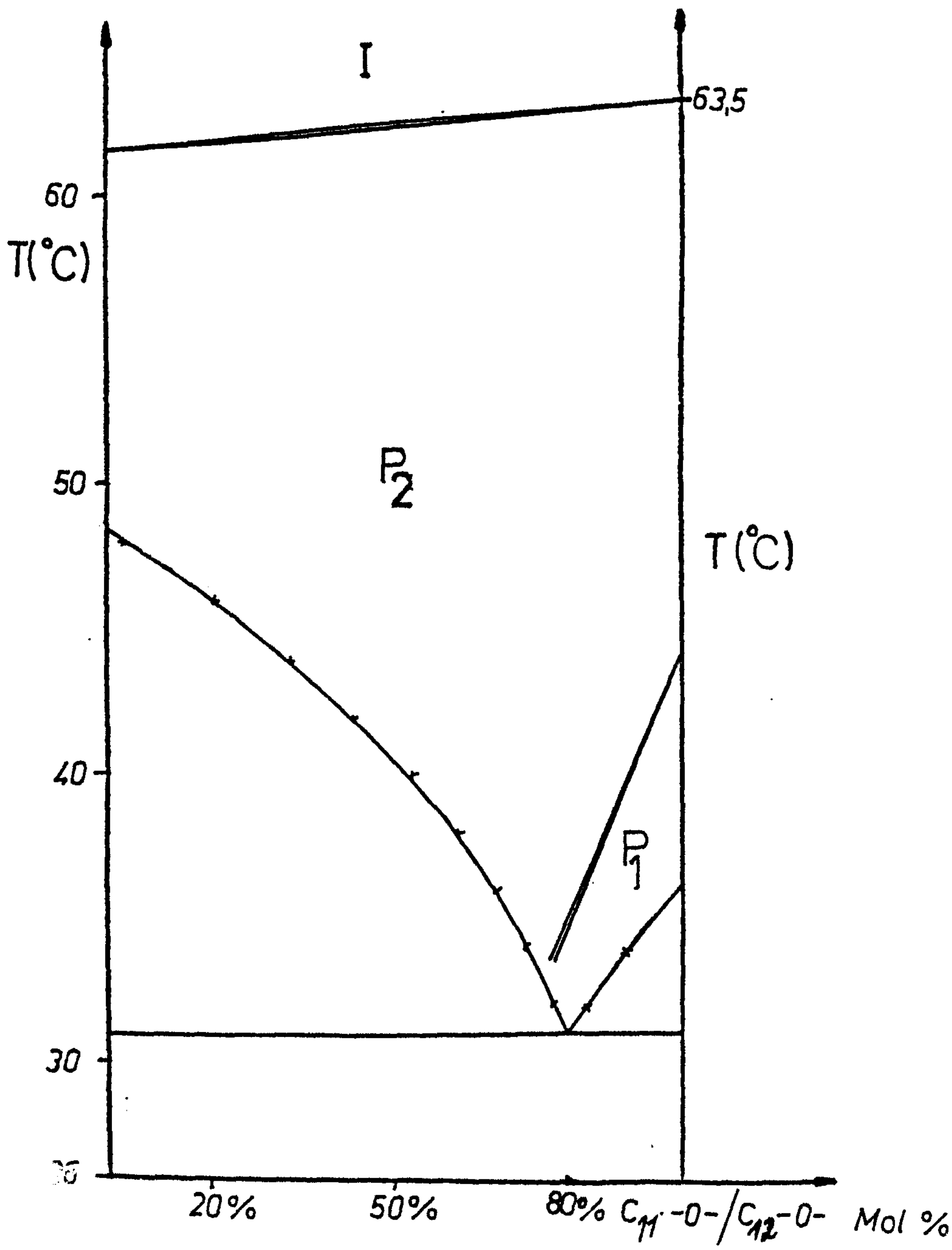

FIG. 6

Phasendiagramm der binären Mischungen von $C_{11}COO$- und $C_{12}COO$-Hexaalkanoyloxy-Derivaten: Vollständige Mischbarkeit der beiden Komponenten in der isotropen und in den pyramidalen Mesophasen $P_2$ und $P_3$.

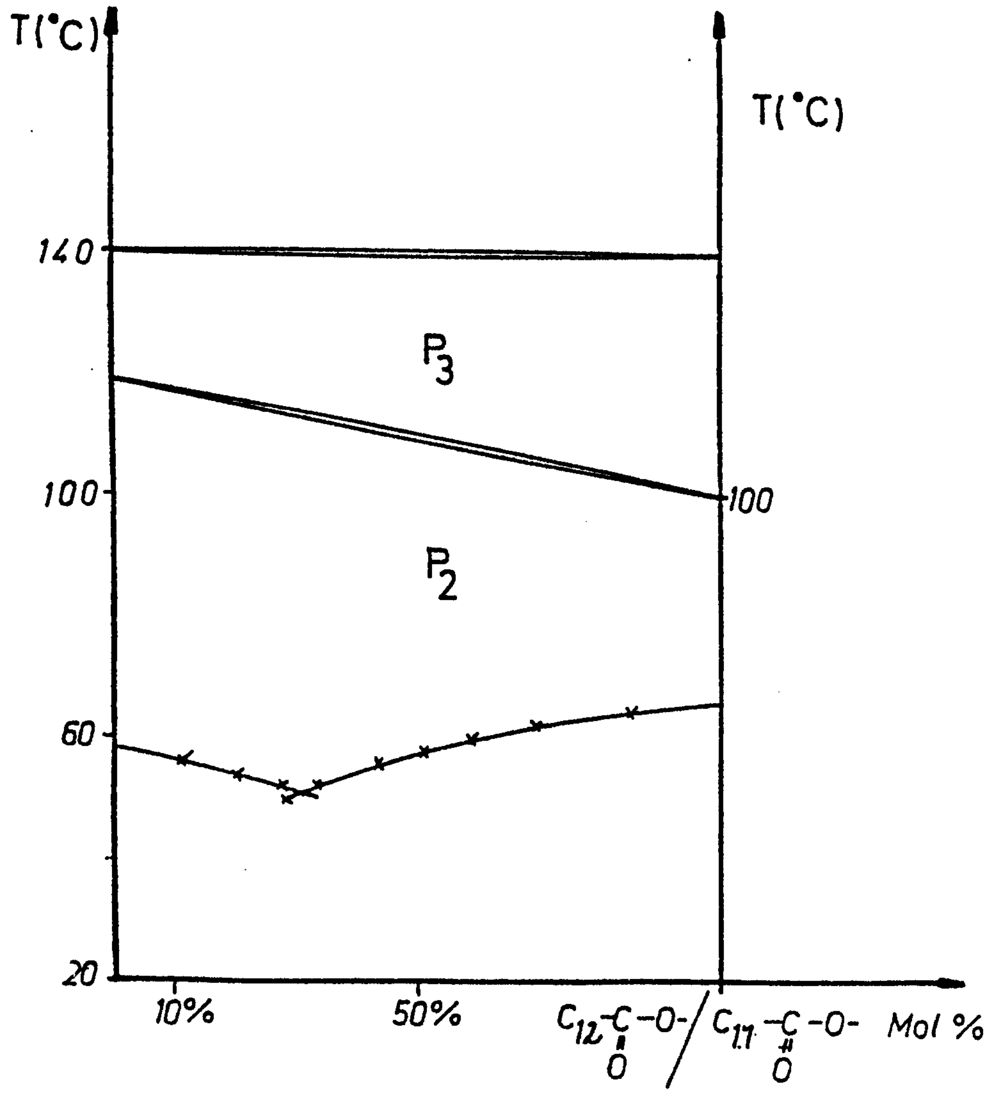

FIG. 7

Phasendiagramm der binären Mischungen von $C_{12}COO$- und $C_{13}COO$-Hexaalkanoyloxy-Derivaten: Vollständige Mischbarkeit in den isotropen und pyramidalen Mesophasen $P_2$ und $P_3$.

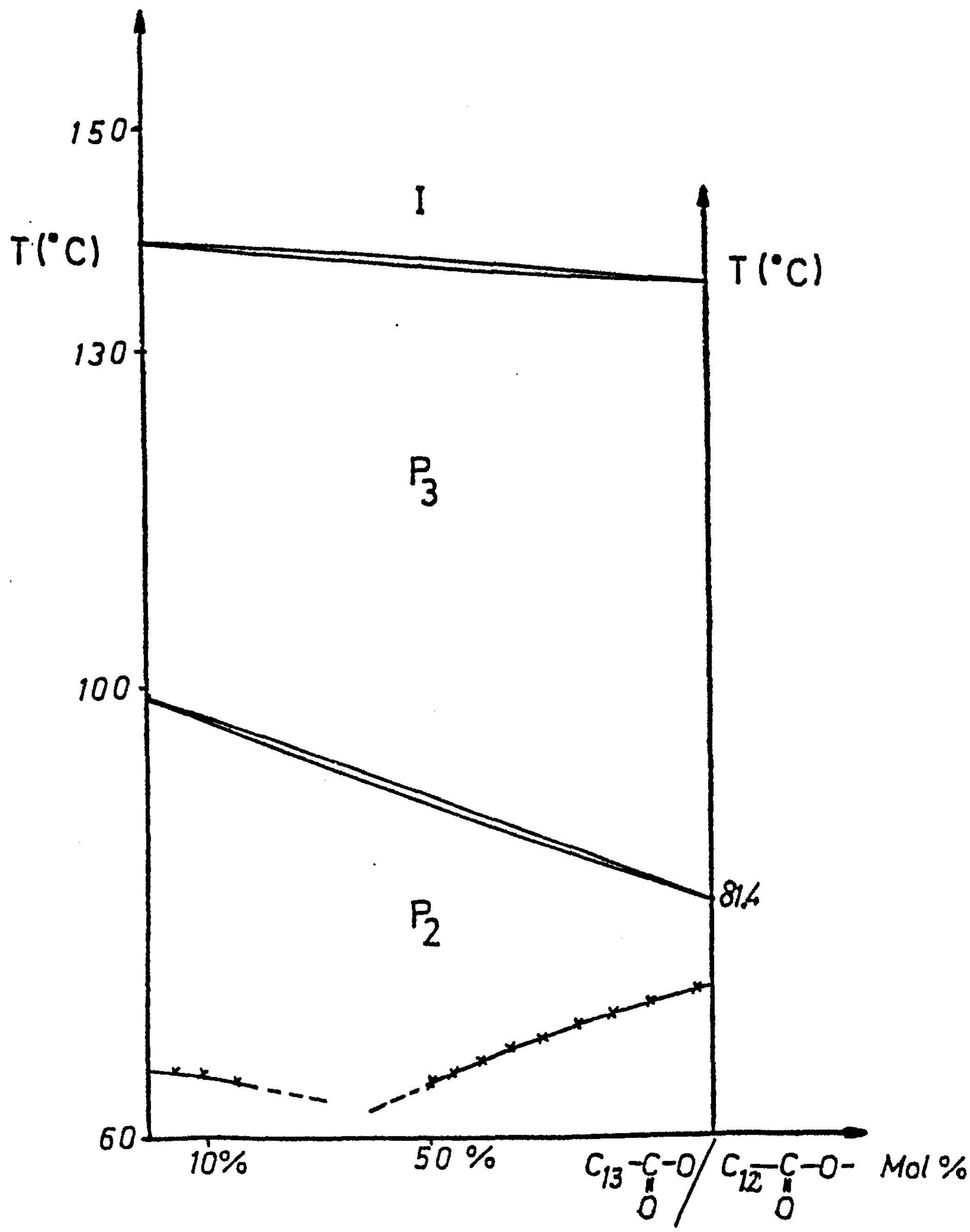

0178684

Europäisches Patentamt

# EUROPÄISCHER RECHERCHENBERICHT

Nummer der Anmeldung

EP 85113263.9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| P,A | EP - A2 - 0 134 576 (MERCK PATENT) * Patentansprüche 1,3,4 * -- | 1,6,9 | C 07 C 43/21<br>C 07 C 69/017<br>C 09 K 19/32 |
| D,A | US - A - 4 333 709 (JEAN-CLAUDE DUBOIS et al.) * Zusammenfassung; Spalte 1, Zeilen 52-68; Fig. 1 * -- | 1,9 | |
| D,A | US - A - 4 430 650 (JEAN BILLARD et al.) * Zusammenfassung * -- | 1,9 | |
| A | CHEMICAL ABSTRACTS, Band 59, Nr. 2, 22. Juli 1963, Columbus, Ohio, USA<br>A.S. LINDESY "Cyclotriveratrylene and related compounds" Spalte 1505c-f<br>& Chem.Ind. 1963, Seiten 823-4 -- | 1,7 | RECHERCHIERTE SACHGEBIETE (Int. Cl 4)<br>C 07 C 43/00<br>C 07 C 35/00<br>C 09 K<br>C 07 C 69/00<br>C 07 C 59/00 |
| A | CHEMICAL ABSTRACTS, Band 62, Nr. 11, 24. Mai 1965, Columbus, Ohio, USA<br>A.S. LINDSEY "The structure of cyclotriveratrylene and related compounds" Spalten 13105h-13106a<br>& J.Chem.Soc. 1965, Seiten 1685-92 -- | 1,7 | |

Der vorliegende Recherchenbericht wurde für alle Patentansprüche erstellt.

| Recherchenort | Abschlußdatum der Recherche | Prüfer |
|---|---|---|
| WIEN | 22-01-1986 | REIF |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

Europäisches Patentamt

# EUROPÄISCHER RECHERCHENBERICHT

0178684 Nummer der Anmeldung

EP 85113263.9

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| A | CHEMICAL ABSTRACTS, Band 95, Nr. 15, 12. Oktober 1981, Columbus, Ohio, USA<br>MENGER, F.M. et al. "Hexapus, a new complexing agent for organic molecules"<br>Seiten 261, 262, Zusammenfassung Nr. 128278a<br>& J.Am.Chem.Soc. 1981, 103 (19), Seiten 5938-9<br>-- | 1 | |
| A | CHEMICAL ABSTRACTS, Band 88, Nr. 25, 19. Juni 1978, Columbus, Ohio, USA<br>HYATT, JOHN A. "Octopus molecules in the cyclotriveratrylene series"<br>Seiten 648, 649, Zusammenfassung Nr. 189387n<br>& J.Org.Chem. 1978, 43, Seiten 1808-11<br>-- | 1 | RECHERCHIERTE SACHGEBIETE (Int. Cl.4) |
| A | CHEMICAL ABSTRACTS, Band 87, Nr. 7, 15. August 1977, Columbus, Ohio, USA<br>HYATT, JOHN A. "Complexing agents derived from cyclotriveratrylene"<br>Seite 442, Zusammenfassung Nr. 52994t<br>& US-A-4 018 832<br>---- | 1,6 | |

Der vorliegende Recherchenbericht wurde für alle Patentansprüche erstellt.

| Recherchenort | Abschlußdatum der Recherche | Prufer |
|---|---|---|
| WIEN | 22-01-1986 | REIF |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503 03 82